## Europäisches Patentamt
## European Patent Office
## Office européen des brevets

Veröffentlichungsnummer: **0 361 218**
**A1**

# EUROPÄISCHE PATENTANMELDUNG

Anmeldenummer: **89117003.7**

Int. Cl.5 **B23B 9/00**

Anmeldetag: **14.09.89**

Priorität: **29.09.88 DE 3832975**

Veröffentlichungstag der Anmeldung:
**04.04.90 Patentblatt 90/14**

Benannte Vertragsstaaten:
**AT CH DE ES FR GB IT LI**

Anmelder: **GILDEMEISTER ITALIANA S.p.A.**
**Via Donizetti 138**
**I-24030 Brembate di Sopra(IT)**

Erfinder: **Ronzoni, Enrico**
**Via Bono 11/B**
**I-24100 Bergamo(IT)**

Vertreter: **Thielking, Bodo, Dipl.-Ing.**
**Patentanwälte Dipl.-Ing. Bodo Thielking**
**Dipl.-Ing. Otto Elbertzhagen Gadderbaumer**
**Strasse 20**
**D-4800 Bielefeld 1(DE)**

## Mehrspindel-Drehautomat mit Rahmengehäuse.

Ein Mehrspindel-Drehautomat mit einem Spindelständer (2) und schaltbarer Spindeltrommel (3), einem Antriebsständer (7) für die Antriebe der Bearbeitungswerkzeuge, einem oberen Querbalken (14) zwischen Spindel und Antriebsständer (7) und einem Maschinenbett (11) ist so ausgebildet, daß der Spindelständer (2) mit mindestens einem Teil des Maschinenbetts (11) und/oder mindestens einem Teil des Querbalkens (14) einteilig ist. Ebenso ist der Antriebsständer (7) mit dem komplementären Teil des Maschinenbetts (7) und/oder dem komplementären Teil des Querbalkens (14) einteilig ausgebildet. Der aus Maschinenbett, Spindelständer, Querbalken und Antriebsständer gebildete Rahmen weist höchstens zwei Trennfugen auf.

FIG. 1

EP 0 361 218 A1

## Mehrspindel-Drehautomat mit Rahmengehäuse

Die Erfindung betrifft einen Mehrspindel-Drehautomaten nach dem Oberbegriff des Anspruchs 1.

Bei den bekannten derartigen Maschinen sind die Werkstückspindeln im Spindelträger gelagert. Die Werkzeugträger sind zum Teil auf dem Maschinenbett und zum Teil am Querbalken gelagert. Die Werkzeuge für die Innenbearbeitung sind teilweise im Antriebsständer gelagert. Wegen der Lagerung der erwähnten Teile auf unterschiedlichen Maschinenteilen ist eine sehr genaue Zuordnung und Anpassung der verschiedenen Bauteile unerläßlich, die sich nur mit Hilfe einer aufwendigen Bearbeitung erreichen läßt. Bei den bekannten Mehrspindel-Drehautomaten in Rahmenform sind darüber hinaus eine Vielzahl von Fügeflächen vorgesehen, die feinbearbeitet und miteinander montiert werden müssen. Die mehrfach vorgesehenen Fügeflächen stellen Schwachstellen im Rahmen des Gesamtaufbaus dar.

Ausgehend von diesem Stand der Technik liegt der Erfindung die Aufgabe zugrunde, einen Mehrspindel-Drehautomaten in Rahmenbauweise so auszubilden, daß der Herstellungsaufwand verringert und die Steifigkeit und Festigkeit des Rahmens erhöht wird.

Die Lösung dieser Aufgabe erfolgt mit den Merkmalen des Kennzeichnungsteils von Anspruch 1. Bevorzugte Ausführungsformen der Erfindung sind in den Unteransprüchen beschrieben.

Bei dem erfindungsgemäßen Mehrspindel-Drehautomaten besitzt der Rahmen höchstens zwei Trennfugen. Das Vorsehen von höchstens zwei Trennfugen hat den Vorteil, daß diese an Stellen verlegt werden können, welche für den Zusammenbau des Rahmens vergleichsweise unproblematisch sind. Es entstehen für die Bildung des Rahmens höchstens zwei Rahmenteile, deren Trennfugen nach einer bevorzugten Ausführungsform vertikal verlaufen.

Im Interesse einer besonders hohen Steifigkeit wird erfindungsgemäß vorgeschlagen, daß der Rahmen sogar einteilig ausgebildet sein kann, und zwar als einteiliger Gußkörper. Bei einer einteiligen Ausführung des Maschinengehäuses entfallen die Fügeflächen und damit deren Bearbeitung. Die Übergänge zwischen den einzelnen Teilen des Rahmens können kraftflußgerecht gestaltet werden. Die Steifigkeit wird wesentlich erhöht.

Die Genauigkeit der erfindungsgemäßen Maschine kann auch dadurch erhöht werden, daß zueinandergehörende Funktionsflächen an einem einzigen Teil in gleicher Aufspannung gefertigt werden. Solche Flächen sind zum Beispiel die Tragflächen für die Werkzeugschlitten in Bezug zum Lager der Spindeltrommel und die Bohrungen für die Antriebspinolen in Bezug zu den Lagerflächen des Längsschlittenblocks.

Nachstehend werden bevorzugte Ausführungsformen der Erfindung anhand der Zeichnung im einzelnen beschrieben. Es zeigen:

Figur 1 - die Frontansicht eines Mehrspindel-Drehautomaten mit einem ungeteilten Maschinengehäuse,

Figur 2 - die Frontansicht eines Mehrspindel-Drehautomaten mit einem geteilten Gehäuse,

Figur 3 - einen Schnitt gemäß Ebene III - III in Figur 1

Figur 4 - einen Schnitt gemäß Ebene IV - IV in Figur 1,

Figur 5 - einen Vertikalschnitt durch die Mittelebene,

Figur 6 - eine Stirnansicht gemäß Ebene VI - VI in Figur 5.

In den unterschiedlichen Zeichnungsfiguren sind gleiche oder einander entsprechende Teile mit gleichen Bezugszeichen versehen. Sie unterscheiden sich lediglich durch Hochstriche voneinander.

Der Mehrspindel-Drehautomat besitzt eine rahmenförmige Gestalt. Der Rahmen umschließt einen Arbeitsraum 1 und wird gebildet durch einen Spindelständer 2, einen Querbalken 14, einen Antriebsständer 7 und ein Maschinenbett 11.

In den Arbeitsraum 1 ragt die Spindeltrommel 3, die im Spindelständer 2 gelagert ist, mit den Werkstückspindeln 4 hinein. Der Arbeitsraum 1 wird von einem Zentralrohr 5 durchsetzt, auf dem ein Längsschlittenblock 6 angeordnet ist. Das Zentralrohr 5 ist einerseits in der Spindeltrommel 3 und andererseits im Antriebsständer 7 des rahmenförmigen Maschinengehäuses gelagert.

Vom Antriebsständer 7 ragen Antriebspinolen 8 in den Arbeitsraum 1 hinein, welche den Vorschub der nicht dargestellten Werkzeugträger auf dem Längsschlittenblock 6 bewirken. An den Spindelständer 2 ist ein Schaltständer 9 angeflanscht. An den Antriebsständer 7 ist ein Getriebekasten 10 angeflanscht.

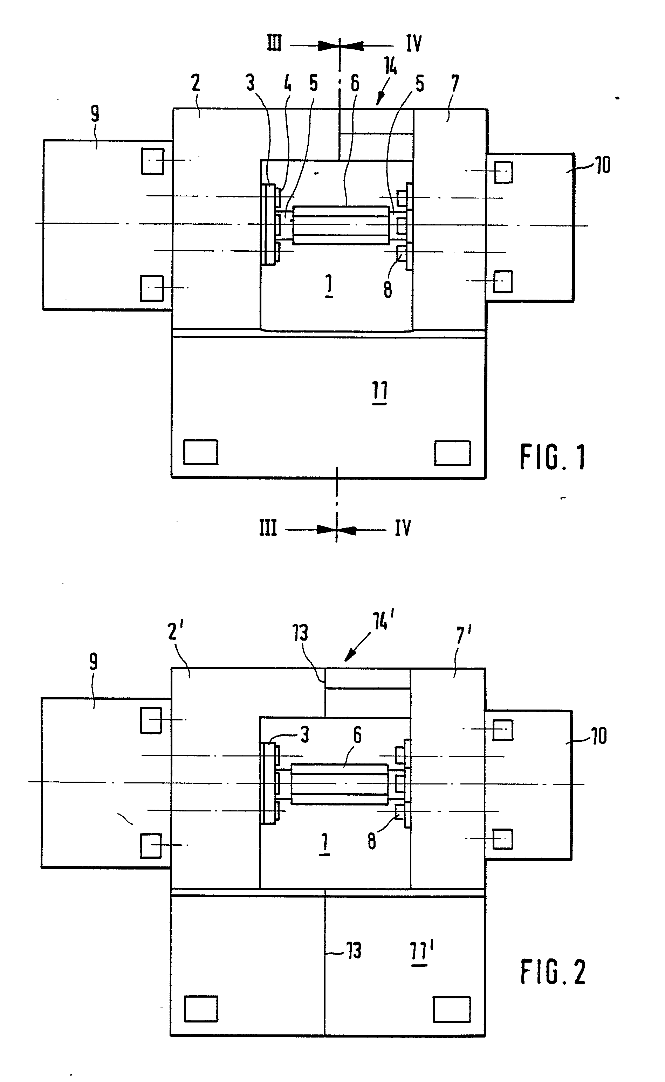

Bei der Ausführungsform gemäß Figur 2 ist der Aufbau sehr ähnlich zu der Ausführungsform gemäß Figur 1. Es ist nur der aus Spindelständer 2', Querbalken 14', Antriebsständer 7' und Maschinenbett 11' gebildete Gehäuserahmen geteilt. Die Teilung erfolgt entlang einer vertikalen Trennfuge 13, welche im oberen Bereich der Maschine durch den Querbalken 14' verläuft und im unteren Teil der Maschine durch das Maschinenbett 11. Es entstehen bei der Ausführungsform gemäß Figur 2 also zwei C-förmige Rahmenteile, die an den Trennfugen 13 zusammenstoßen und dort miteinander verbunden sind.

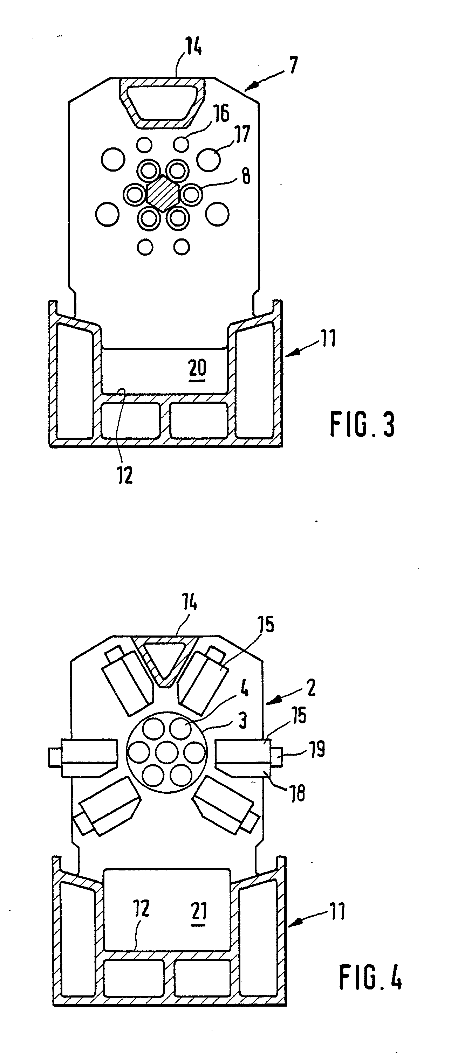

In Figur 3 ist ersichtlich, daß sich um den Längsschlitten 6 die Antriebspinolen 8 herum gruppieren, welche den Vorschub der Werkzeugschlitten auf dem Längsschlittenblock 6 bewirken. Für den Fall, daß die Werkzeuge auf den Werkzeugschlitten rotierend angetrieben werden, sind Bohrungen 16 und 17 in der Stirnwand des Antriebsständers 7 vorgesehen, welche außerhalb des Kreises der Antriebspinolen 8 angeordnet sind. Durch diese Bohrungen können nach Bedarf Antriebszweige geführt werden.

Das Maschinenbett 11, welches den unteren Querschenkel des Rahmens bildet, ist verrippt und bildet eine Wanne 12 zur Aufnahme von Kühlmittel und Spänen. Die Stirnflächen des Antriebsständers 7 haben in diesem Bereich einen Durchbruch 20 zur Aufnahme eines nicht dargestellten Späneförderers.

Der Schnitt gemäß Figur 4 zeigt außer einem Querschnitt des Maschinenbetts 11 und des Querbalkens 14 eine Ansicht auf den Spindelständer 2 mit Spindeltrommel 3, in der sechs Werkstückspindeln 4 gelagert sind. Hier sind die Planschlitten 15 eingezeichnet, die in Figuren 1 und 2 der besseren Übersichtlichkeit wegen weggelassen wurden. Die Planschlitten 15 werden je auf einer Konsole 18 verschoben, die fest mit dem Spindelständer 2 verbunden sein können. Die Vorschubantriebe 19 sind hinter den Planschlitten 15 angedeutet.

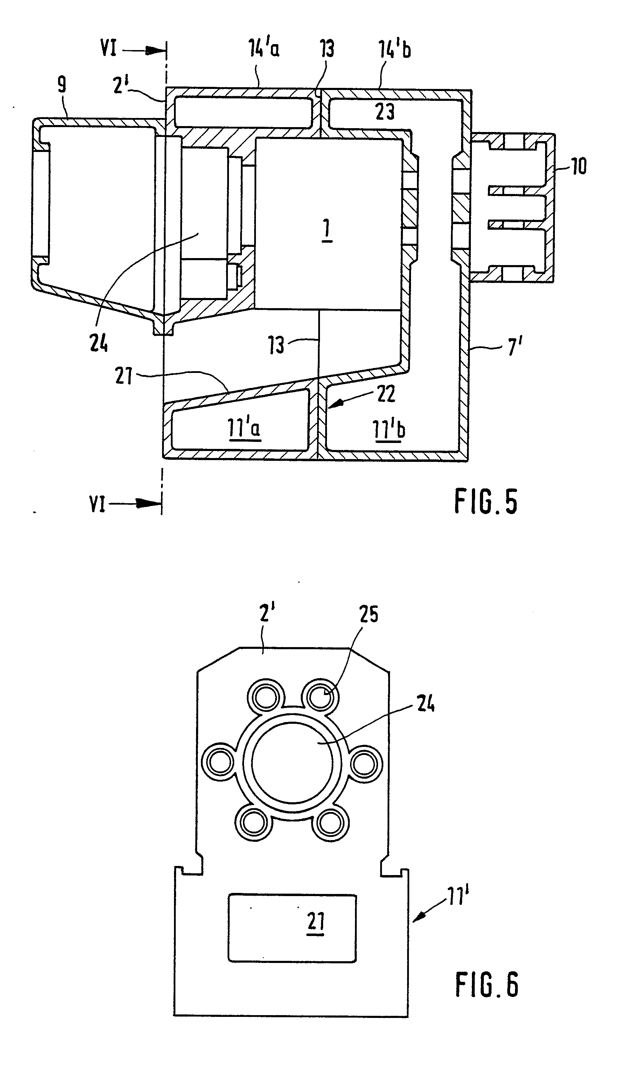

Der Längsschnitt gemäß Figur 5 verdeutlicht die Teilung des Maschinenrahmens in eine linke und in eine rechte Hälfte. Die linke Hälfte besteht aus dem Spindelständer 2, an den das Querbalkenstück 14′a und das Maschinenbettstück 11′a angeformt ist. Die rechte Hälfte des Maschinenrahmens wird von dem Antriebsständer 7′ gebildet, der einteilig mit dem rechten Querbalkenstück 14′b und dem rechten Maschinenbettstück 11′b ausgebildet ist.

Im Bereich der Trennfuge 13 ergeben sich stabile doppelte Zwischenwände 23 und 22.

In der linken Rahmenhälfte ist eine Aussparung 24 für die Spindeltrommel 3 erkennbar, die von dem angeflanschten Schaltständer 9 überdeckt wird. Bei der hier gewählten Ausführung ist unterhalb des Arbeitsraumes 1 ein Späneschacht 21 vorgesehen, der die Späne über eine geneigte Fläche zur Schaltständerseite abführt.

## Ansprüche

1. Mehrspindel-Drehautomat mit einem Spindelständer und mit schaltbarer Spindeltrommel, einem Antriebsständer für die Antriebe der Bearbeitungswerkzeuge, einem oberen Querbalken zwischen Spindel- und Antriebsständer und einem Maschinenbett, wobei Maschinenbett, Spindelständer, Querbalken und Antriebsständer einen Rahmen bilden, dadurch gekennzeichnet,
daß der Spindelständer (2; 2′) mit mindestens einem Teil (11′a) des Maschinenbetts (11; 11′) und/oder mindestens einem Teil (14′a) des Querbalkens (14; 14′) sowie der Antriebsständer (7; 7′) mit dem komplementären Teil (11b) des Maschinenbetts (11; 11′) und/oder dem komplementären Teil (14′b) des Querbalkens (14; 14′) derart einteilig ausgebildet sind, daß der Rahmen höchstens zwei Trennfugen (13) aufweist.

2. Mehrspindel-Drehautomat nach Anspruch 1, dadurch gekennzeichnet,
daß die Trennfugen (13) vertikal verlaufen.

3. Mehrspindel-Drehautomat nach Anspruch 1 oder 2, dadurch gekennzeichnet,
daß die Trennfugen (13) miteinander fluchten.

4. Mehrspindel-Drehautomat nach einem oder mehreren der Ansprüche 1 bis 3, dadurch gekennzeichnet,
daß der Rahmen (2, 7, 11, 14) mindestens einen ungeteilten Rahmenbereich (2, 14′a, 11′a) aufweist, der die Form eines liegenden U aufweist.

5. Mehrspindel-Drehautomat nach einem oder mehreren der Ansprüche 1 bis 4, dadurch gekennzeichnet,
daß der Rahmen (2, 7, 11, 14) aus zwei ungeteilten, die Form eines liegenden U aufweisenden Rahmenbereichen (2, 14′a, 11′a und 7′, 11′b, 14′b) besteht.

6. Mehrspindel-Drehautomat nach einem oder mehreren der Ansprüche 1 bis 5, dadurch gekennzeichnet,
daß der Rahmen (2, 7, 11, 14) aus zwei einander ergänzenden einteiligen L-förmigen Rahmenbereichen besteht.

7. Mehrspindel-Drehautomat nach Anspruch 1, dadurch gekennzeichnet,
daß der Rahmen (2, 7, 11, 14) einteilig ausgebildet ist.

8. Mehrspindel-Drehautomat nach Ansprüchen 1 und 7, dadurch gekennzeichnet,
daß der Rahmen (2, 7, 11, 14) als einteiliger Gußkörper ausgebildet ist.

FIG. 1

FIG. 2

FIG. 3

FIG. 4

**FIG.5**

**FIG.6**

| | **EINSCHLÄGIGE DOKUMENTE** | | EP 89117003.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. X) 5 |
| A | <u>DE - A1 - 2 445 340</u><br>(VEB WERKZEUGKOMBINAT 7. OKTOBER BERLIN)<br> * Fig. 1 *<br>-- | 1 | B 23 B 9/00 |
| A | <u>CH - A - 507 763</u><br>(EUNIPP AG)<br> * Fig. 1 *<br>-- | 1 | |
| A | <u>GB - A - 2 194 906</u><br>(WIGHTMAN)<br> * Fig. 2; Zusammenfassung *<br>-- | 1,7 | |
| A | <u>AT - B - 282 289</u><br>(MOLINS MACHINE COMPANY LTD.)<br> * Fig. 3,4,6; Seite 3, Zeile 55 - Seite 4, Zeile 2 *<br>---- | 1,7 | |
| | | | RECHERCHIERTE SACHGEBIETE (Int. Cl. X) 5 |
| | | | B 23 B 9/00<br>B 23 B 11/00<br>B 23 B 17/00<br>B 23 Q 1/00 |

Der vorliegende Recherchenbericht wurde für alle Patentansprüche erstellt.

| Recherchenort | Abschlußdatum der Recherche | Prüfer |
|---|---|---|
| WIEN | 21-11-1989 | BRÄUER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82